(19) Europäisches Patentamt European Patent Office Office européen des brevets

(11) **EP 4 530 071 A2**

(12) **EUROPEAN PATENT APPLICATION**

(43) Date of publication:
02.04.2025  Bulletin 2025/14

(21) Application number: 25156200.5

(22) Date of filing: 28.02.2022

(51) International Patent Classification (IPC):
*B33Y 80/00* (2015.01)

(52) Cooperative Patent Classification (CPC):
(C-Sets available)
**B33Y 10/00; B22F 3/105; B22F 3/115; B22F 3/15; B22F 7/064; B22F 10/14; B22F 10/25; B22F 10/28; B33Y 80/00;** B22F 2003/1051; B22F 2007/042; B22F 2007/045; B22F 2207/20; B22F 2998/10; B22F 2999/00;  (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: 15.04.2021  GB 202105385

(62) Document number(s) of the earlier application(s) in accordance with Art. 76 EPC:
**22712868.3 / 4 323 134**

(71) Applicant: **Tokamak Energy Ltd**
**Abingdon, Oxfordshire OX14 4SD (GB)**

(72) Inventor: **MORRISON, Alasdair**
**Thame, OX9 3EZ (GB)**

(74) Representative: **Marks & Clerk LLP**
**15 Fetter Lane**
**London EC4A 1BW (GB)**

Remarks:
This application was filed on 06.02.2025 as a divisional application to the application mentioned under INID code 62.

(54)  **GRADED INTERLAYER**

(57)  A method of manufacturing an interlayer. A first section is formed from a first interlayer material. The step of forming the first section comprises one or more of: laser micromachining; laser surface texturing; electron beam surface texturing; electro-discharge machining; or conventional machining.

A second section is formed from a second interlayer material. The step of forming the second section comprises filling the second interlayer material into the first section as a powder or as a molten metal. Following formation of the second section, the first and second sections interlock. The first interlayer material and the second interlayer material have different coefficients of thermal expansion, CTE.

Figure 7A

EP 4 530 071 A2

(52) Cooperative Patent Classification (CPC): (Cont.)
Y02E 30/10; Y02P 10/25

C-Sets
B22F 2998/10, B22F 10/28, B22F 2007/042,
B22F 2207/20, B22F 2007/045;
B22F 2999/00, B22F 10/10, B22F 2007/042,
B22F 2005/005

**Description**

Field of the Invention

The present invention relates to a method of manufacturing an interlayer for joining materials of dissimilar coefficient of thermal expansion (CTE), and methods of joining such materials using the interlayer.

Background

A divertor is a device within a tokamak plasma vessel which allows for removal of waste material and power from the plasma while the tokamak is operating. The waste material naturally arises as particles diffuse out from the magnetically confined plasma core. The waste particles are a combination of the fuel (deuterium and tritium), fusion products (helium ash), and heavier ions released from the walls of the chamber. To confine the plasma, tokamaks utilise magnetic fields. However, particles slowly and randomly diffuse out, and eventually impact one of the divertor surfaces, which are configured to withstand the high flux of ions.

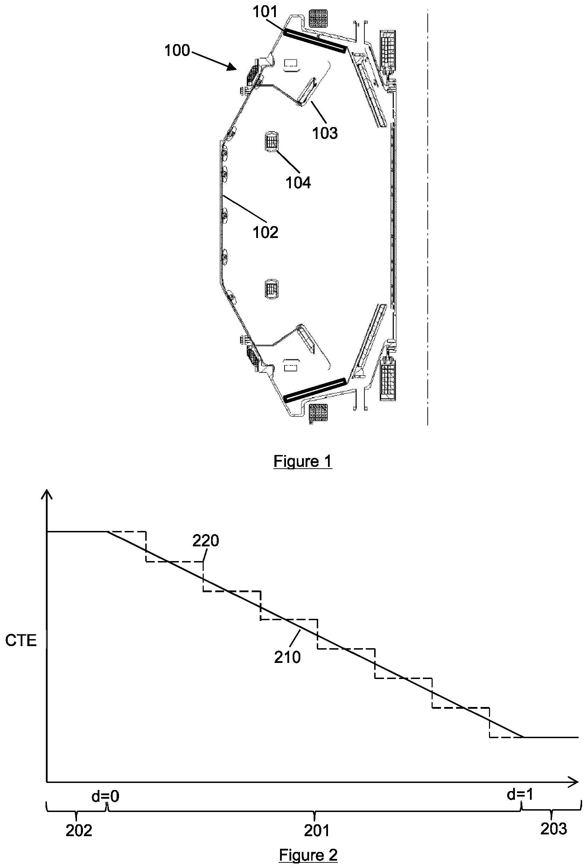

Figure 1 shows a cross section of a tokamak plasma chamber, illustrating one possible configuration of the divertor. The divertor surfaces 101 are at the top and bottom of the plasma chamber 100. The plasma chamber first wall (i.e. plasma facing components) includes the inner wall 102 of the chamber, and also includes baffles 103 located close to each divertor surface, for directing the plasma at the divertors, and covers 104 over field coils internal to the plasma chamber.

The high heat flux and erosion experienced by the surface layer of a divertor requires a material that can stand up to those conditions. A common choice is a refractory metal having a melting point over 1850°C, e.g. titanium or vanadium, more preferably over 2000°C, e.g. molybdenum, or tungsten. However, refractory metals are generally brittle, so the cooling elements of the divertor which contain a coolant under pressure are commonly made from an alternative material which is tougher(hereafter a "thermally conductive material"), such as copper.

This presents a problem - the thermal expansion coefficient of the thermally conductive material will be very different to that of the refractory metal, and there will be significant heat flux and temperature changes at the join between them. This means that a common failure mode of a divertor is damage due to stresses at this join.

The stresses at the join between the thermally conductive material and the refractory metal can be mitigated by providing an interlayer - a layer of material having a thermal expansion coefficient intermediate between that of the refractory metal and that of the thermally conductive material. The interlayer may be a composite material comprising both the refractory metal and the thermally conductive material, and may be graded such that the proportion of each material varies linearly through the interlayer, to provide a more gradual change in thermal expansion coefficient and other material mechanical and thermal properties.

However, even with such grading, failures due to thermal expansion induced stresses still occur. There is therefore a need for improvements to the interlayer to further reduce the occurrence of such failures.

While the above has been written in the context of a divertor for a nuclear fusion reactor, such interlayers are also useful in other contexts where there is a need to join two materials with different thermal expansion coefficients where temperature variations occur. The particular case of a refractory metal joined to a thermally conductive material is also relevant on the "first wall" (i.e. plasma facing surface) of a plasma chamber such as a tokamak, and to other applications where a high heat flux and high erosion are expected, such as rocket exhausts.

Summary

According to a first aspect, there is provided a method of joining first and second materials. The first material is a metal, a ceramic, or a composite material comprising carbon fibre, and the second material is a metal. The first material has a coefficient of thermal expansion, CTE, which is higher than a CTE of the second material. An interlayer is formed, having a CTE which varies through the interlayer, and having a high thermal expansion surface and a low thermal expansion surface. The first material is bonded to the high thermal expansion surface of the interlayer, and the second material is bonded to the low thermal expansion surface of the interlayer. The CTE of the interlayer varies through its depth between the CTE of the first material and the CTE of the second material. The interlayer has first, second, third, and fourth average coefficients of thermal expansion, aCTE, defined such that each aCTE is the average coefficient of thermal expansion over one quarter of the thickness of the interlayer. The first aCTE is defined from the high thermal expansion surface and is less than the CTE of the first material. The second aCTE is defined from the midpoint of the thickness of the interlayer towards the high thermal expansion surface and is less than the first aCTE. The third aCTE is defined from the midpoint of the interlayer towards the low thermal expansion surface and is less than the second aCTE. The fourth aCTE is defined from the low thermal expansion surface and is less than the third aCTE and greater than the CTE of the second material. Either:

the difference between the first and second aCTE is greater than the difference between the second and third aCTE, and the difference between the second and third aCTE is greater than the difference between the third and fourth aCTE ; or
the difference between the second and third aCTE is greater than both the difference between the first and second aCTE and the difference between the third and fourth aCTE.

According to a second aspect, there is provided an interlayer for joining a first metal and a second metal. The interlayer has a coefficient of thermal expansion (CTE) which varies through the interlayer, and has a high thermal expansion surface and a low thermal expansion surface. The interlayer has first, second, third, and fourth average coefficients of thermal expansion, aCTE, defined such that each aCTE is the average coefficient of thermal expansion over one quarter of the thickness of the interlayer. The first aCTE is defined from the high thermal expansion surface and is less than the CTE of the first material. The second aCTE is defined from the midpoint of the thickness of the interlayer towards the high thermal expansion surface and is less than the first aCTE. The third aCTE is defined from the midpoint of the interlayer towards the low thermal expansion surface and is less than the second aCTE. The fourth aCTE is defined from the low thermal expansion surface and is less than the third aCTE and greater than the CTE of the second material. Either:

> the difference between the first and second aCTE is greater than the difference between the second and third aCTE, and the difference between the second and third aCTE is greater than the difference between the third and fourth aCTE ; or
> the difference between the second and third aCTE is greater than both the difference between the first and second aCTE and the difference between the third and fourth aCTE.

According to a third aspect, there is provided an apparatus comprising a first component, a second component, and an interlayer. The first component is formed from a first metal having a first coefficient of thermal expansion. The second component is formed from a second metal having a second coefficient of thermal expansion. The is an interlayer according to the second aspect, wherein the first metal element is bonded to the high thermal expansion surface of the interlayer, and the second metal element is bonded to the low thermal expansion surface of the interlayer. The first coefficient of thermal expansion is greater than the second coefficient of thermal expansion, and the coefficient of thermal expansion of the interlayer has a value between the first and second coefficients of thermal expansion throughout the interlayer.

## Brief Description of the Drawings

> Figure 1 is a cross section of a tokamak plasma chamber;
> Figure 2 shows the grading profile of exemplary known interlayers;
> Figure 3 illustrates the grading profile of two proposed interlayers;
> Figure 4 shows an abstraction of the grading profiles of Figure 3;
> Figure 5 is an exemplary graph of the volume fractions of copper and tungsten within an interlayer;
> Figure 6A shows a laminated interlayer, and Figure 6B shows the volume fraction of materials in that interlayer;
> Figure 7 shows a structurally graded interlayer;
> Figure 8 illustrates the HIP process;
> Figure 9 illustrates an exemplary divertor; and
> Figure 10 illustrates an exemplary first wall tile.

## Detailed Description

Previous graded interlayers have either had a linear or stepped profile - i.e with the thermal expansion coefficient of each the interlayer either changing linearly through the interlayer, or in large discrete steps across the interlayer. Instead, this document proposes more complex grading profiles which provide improved resistance to strain caused by thermal expansion.

One way to achieve a material having a coefficient of thermal expansion (CTE) intermediate between a high thermal expansion material and a low thermal expansion material is to provide a composite material formed from both materials, with the proportion of each material determining the bulk thermal expansion coefficient. Example composite types will be described later.

Figure 2 shows the grading profile of exemplary known interlayers. Each interlayer 201 joins a high thermal expansion material 202 to a low thermal expansion material 203. In the example of a divertor for a tokamak, the high thermal expansion material may be copper and the low thermal expansion material may be tungsten. The interlayer depth "d" is the distance across the interlayer from the high thermal expansion material to the low thermal expansion material. Within this disclosure, the depth d will be measured in arbitrary units such that the transition between the high thermal expansion material 202 and the interlayer 201 is at d=0, and the transition between the low thermal expansion material 203 and the interlayer 201 is at d=1. It will be appreciated that any description relying on this definition of d can be transformed into any other scale for measuring the distance d by suitable mathematical operations, and this definition does not limit the thickness of the interlayer to 1 of any particular unit.

The "linear" interlayer 210 has a thermal expansion coefficient which decreases linearly with distance across the interlayer. While this is shown as a continuous decrease, it may be the result of e.g. a laminated composite with differing proportions of high thermal expansion and low thermal expansion layers in the different regions, with the value plotted on the graph being the effective bulk thermal expansion coefficient over a small distance.

The "stepped" interlayer 220 has a thermal expansion coefficient which decreases in a stepwise fashion with distance across the interlayer, with a linear decrease between each step.

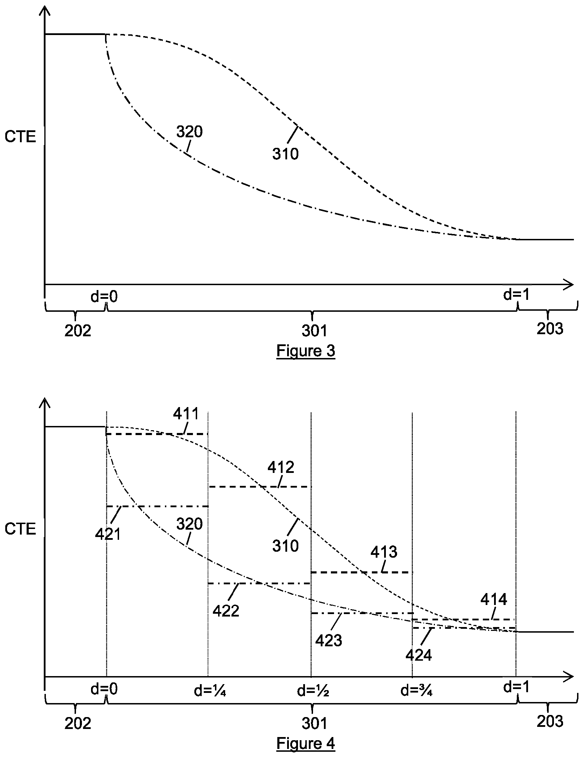

Figure 3 shows two proposals for improved interlayer gradings. Again, each interlayer 301 joins a high thermal expansion material 202 to a low thermal expansion material 203. The first exemplary interlayer is a "sigmoid" interlayer 310 follows a sigmoid function, i.e. a function where the slope tends to zero at each of the material layers 202, 203, and which has exactly one inflection point. This low slope at the joins between the interlayer and each material ensures that these regions have only low stress when thermal expansion occurs, and that the stress is instead in the central regions of the interlayer where material bonding is likely to be stronger.

The second exemplary interlayer 320 follows a function such that the slope of the function approaches zero monotonically towards the low thermal expansion material, i.e. the magnitude of the slope is always steady or decreasing as the function moves towards the low thermal expansion material. This results in the steepest changes in thermal expansion coefficient being adjacent to the high thermal expansion material, which provides favourable performance as the high thermal expansion material and the interlayer at that interface will generally be more ductile and compliant than the low thermal expansion material and the interlayer at the corresponding interface, and therefore able to accommodate higher stresses without failure.

One example function for the second exemplary interlayer would be a polynomial function of the form

$$\alpha = \sum_{k=0}^{n} a_k d^k$$

, where $\alpha$ is the coefficient of thermal expansion (CTE) (averaged over a small thickness, in the case of composite materials), d is the depth through the interlayer (i.e. the distance from one of the materials being joined), and $a_k$ are numerical coefficients. By selection of the coefficients $a_k$, a profile can be determined such that slope of the resulting function approaches zero monotonically at least within the range of the interlayer (0<d<1, as defined previously). For example the interlayer may follow a square function (where n=2) or a cubic function (where n=3).

While the exemplary interlayers shown in Figure 3 are idealisations, approximations to those structures will still give considerably better results than simple linear or stepped interlayers. In the following description, "average CTE" of a region of the interlayer means the weighted average of the CTE of each material in the interlayer, weighted by the volume fraction of the material in that region.

Similar to the difference between the linear interlayer and stepped interlayer in Figure 2, a stepped equivalent to the interlayer functions described with reference to Figure 3 may be created. For the below discussion, consider an interlayer divided into N steps along its thickness, with each step taking up 1/N of the thickness of the interlayer, where N is at least 4 (to allow distinction over a stepped interlayer). The average CTE of each step has a value between the CTEs of the materials to be joined, and the average CTEs of each step decrease across the interlayer from the high thermal conductivity surface (connected to the material with high CTE) to the low thermal expansion surface (connected to the material with low CTE).

For an approximation to the sigmoid interlayer, the difference in average CTE for adjacent steps closer to the edge of the interlayer (i.e. closer to the high or low thermal expansion surfaces) will be less than the difference in average CTE for adjacent steps towards the midpoint of the interlayer.

For an approximation to the second exemplary interlayer, the difference in average CTE for adjacent steps will be greater the closer those steps are to the high thermal expansion surface.

While the above is described in terms of an interlayer constructed in discrete steps, it also applies to other constructions of an interlayer. As a first example, an interlayer which perfectly follows the functions shown in Figure 3 would also have such a variation of average CTE for N regions defined along the thickness of the interlayer. As a second example, an interlayer with a laminated construction, where the CTE at a given thickness is either a high or low value, but the average CTE over each "step" approximately follows the desired change in CTE.

The particular case of N=4 is shown in Figure 4, which demonstrates this approximation for the interlayer functions 310 and 320. The interlayer is divided into 4 sections, from d=0 to d=1/4, d=1/4 to d=1/2, d=1/2 to d=3/4, and d=3/4 to d=1. The average value of each section is shown for each interlayer (411, 412, 413, 414 for the interlayer function 310, from high to low CTE, and 421, 422, 423, 424 for the interlayer function 320, from high to low CTE). As can be seen from the figure, the differences between these averages have the relationships described above.

The N=4 case will hold for any interlayer sufficiently different from the linear interlayers of the prior art to show the desired improvements. The advantage will increase for interlayers that obey closer approximations to the smooth functions discussed above, but this will be a trade off with cost and ease of manufacture.

The interlayer may be manufactured in various ways, with the variation in the CTE being produced by alloying, powder grading, laminate grading, structural grading, or providing other composite material structures.

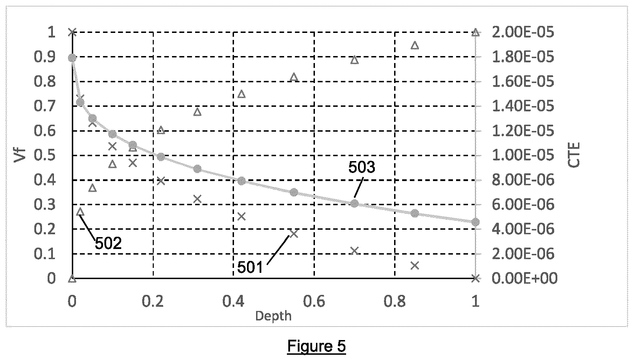

Powder grading involves providing two or more materials in powder form, and varying the volume fraction of these materials through the interlayer to produce the required variation in CTE. For example, the first powder may be the low thermal expansion material, and the second powder may be the second thermal expansion material. These powders are then mixed and sintered or otherwise bonded together, while controlling the volume fraction of each powder during the bonding, to provide a bulk CTE which varies in the required way. For example, Figure 5 shows an example graph of the volume fractions of copper 501 (high CTE) and tungsten 502 (low CTE) within an interlayer, plotted with the average CTE of the composite 503, to provide an approximately cubic polynomial interlayer. This interlayer is constructed as several discrete layers, each having a set volume fraction, but as the interlayer is built up some mixing between the individual layers will be inevitable, and diffusion between the materials will occur during sintering, resulting in a smoother overall gradient.

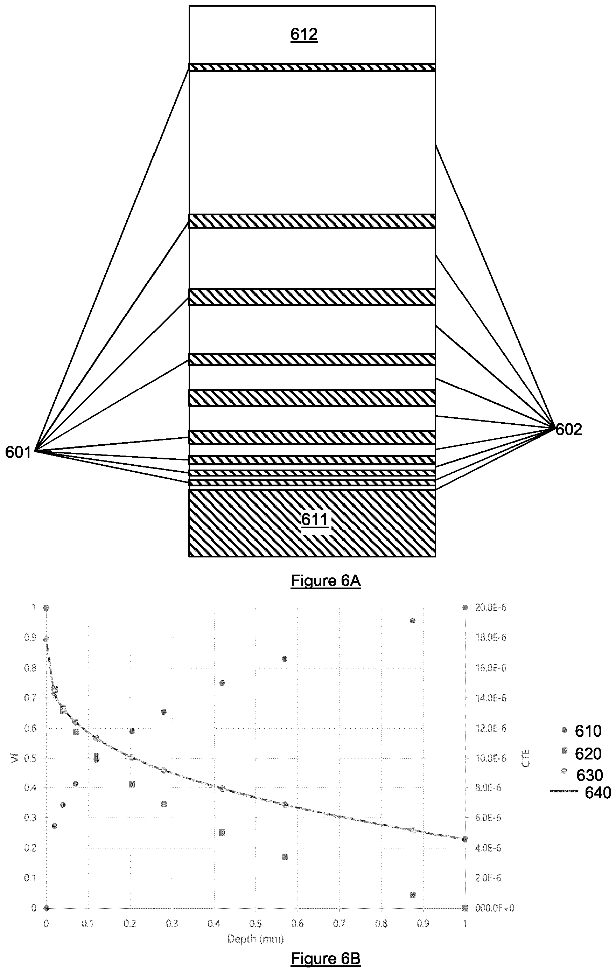

A graded interlayer may also be provided as shown in Figure 6A with a stack of parallel laminates arranged such that the interlayer has alternating layers of a first 601 and second 602 material (e.g. the high and low thermal expansion materials) where each layer has a thickness such that the average CTE (i.e. the weighted average of the CTE of each material, weighted by the volume of each material present) follows the desired grading profile. In this example, the first and second materials are the same as the high thermal expansion material 611 and the low thermal expansion material 621 to be joined. Figure 6B shows the volume fraction of tungsten 610 and copper 620 in a tungsten/copper interlayer, along with the average CTE 630 at each depth, which aligns with the desired profile 640 for the CTE.

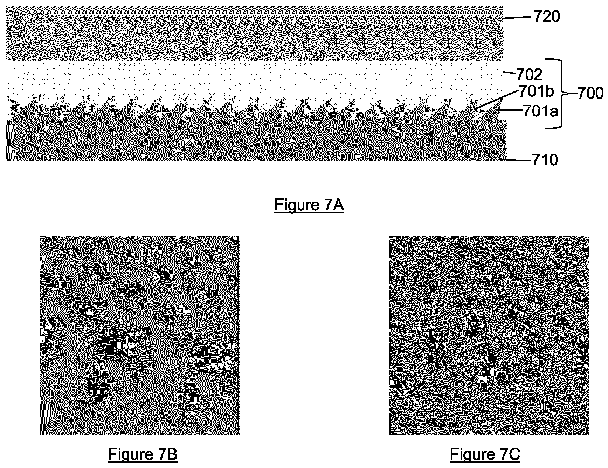

A further example is a structurally graded interlayer 700 as shown in Figure 7A, which joins a component formed from a high thermal expansion material 710 and a component formed from a low thermal expansion material 720. The interlayer 700 comprises a first section 701a, b made from the low thermal expansion material, and a second section 702 made from the high thermal expansion material, wherein the two sections interlock to form the interlayer. In the interlayer illustrated, the first section comprises sets of protrusions 701a, 701b, with the first set of protrusions 701a being angled "out of the plane" of the figure, and the second set 701b being angled into the plane. The interlocking profile is such that the average CTE of cross sections parallel to the interlayer follows the required interlayer profile of CTE vs depth. Other example structures for the first or second section include triply periodic minimal surfaces, such as a gyroid, shown in Figure 7B, or a Schwarz D structure, shown in Figure 7C. The gyroid has a surface defined by the equation

$$\sin x \cos y + \sin y \cos z + \sin z \cos x = 0$$

and the Schwarz D structure has a surface defined by the equation
$\sin x \sin y \sin z + \sin x \cos y \cos z + \cos x \sin y \cos z + \cos x \cos y \sin z = 0$

These and related surfaces may be used with appropriate adjustments to provide the required grading.

In the example shown in Figure 7, the low thermal expansion portion of the interlayer 701 is integral with the component formed from the low thermal expansion material, and this may alternatively or additionally be true for the high thermal expansion elements.

Other manufacturing techniques which are suitable for forming a section of the structurally graded interlayer include:

- Additive manufacturing techniques such as:

  ○ Laser powder bed fusion
  ○ Electron beam powder bed fusion
  ○ Powder bed binder jetting, in which a powder is bound by polymers to create the required shape, and then the polymers are removed and the powders are sintered to bulk.
  ○ Direct energy deposition, i.e. the impingement of material into a melt pool which is then moved to form an additive layer.

- Laser micromachining, i.e. the ablative removal of material from a surface by a laser
- Laser or electron beam surface texturing, i.e. the use of a laser or electron beam to ablate material and to provide controlled melting and solidification to manipulate surface properties
- Conventional machining
- Electro-discharge machining, i.e. the erosion of the surface by controlled electrical discharges.

Where the material of the section would form surface oxides, these may be controlled during formation or subsequently removed to ensure a good bond to the other section. Where the section is created via additive manufacturing, it may be printed directly onto the low thermal expansion material or the high thermal expansion material, as appropriate (i.e. on the material matching the material of the section).

The other section of a structurally graded interlayer may be backfilled into the first manufactured section as a powder (which can then be formed into a bulk by sintering, HIP (Hot Isostatic Pressing), FAST (Field Assisted Sintering Technique) pressing, or other suitable technique), or as a molten metal (i.e. casting). To improve bonding between the two sections, a thin layer of the material of te second section may be provided on the first section, e.g. by providing a foil of the material of the second section, or by a deposition technique such as plasma spraying or chemical vapour deposition. Where an additive manufacturing technique is used to create one section, the other section may be simultaneously created as part of the additive manufacturing technique, where such technique allows the use of two different materials.

For any of the interlayer constructions above, or any other interlayer which may be envisioned, the interlayer may be bonded to the high and low thermal expansion materials to be joined by the use any suitable process. For example a sintering process may be used, such as vacuum sintering, uniaxial pressure assisted sintering (i.e. hot pressing), current assisted sintering (e.g. field assisted sintering, spark plasma sintering, or pulsed electric current sintering), or hot isostatic pressing (HIP).

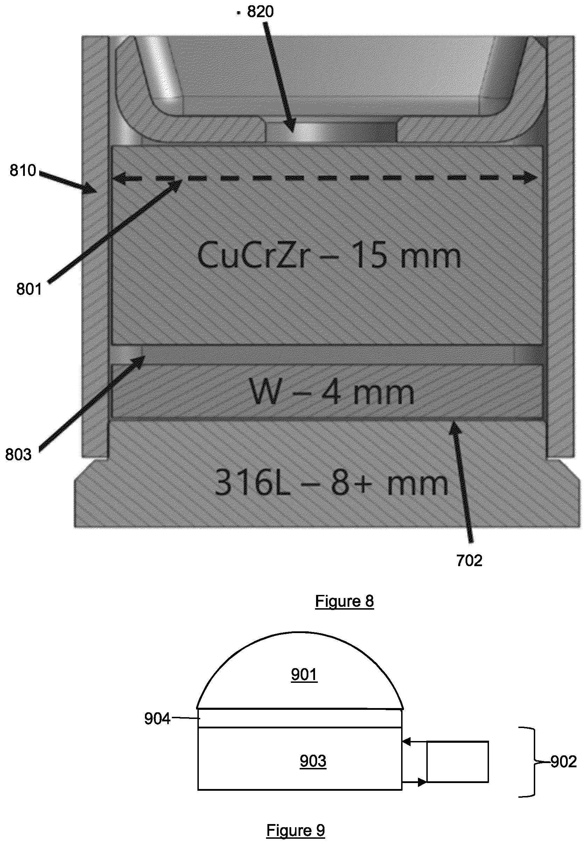

As a simplified description of the HIP process, with reference to Figure 8, the high 801 and low 802 thermal expansion materials are placed inside a canister 810 with the interlayer 803 between them (or materials which will form the interlayer during the HIP process). Air is removed and an inert gas at high pressure is provided via the port 820, and the canister is heated. The simultaneous application of heat and pressure eliminates internal voids and microporosity from the materials within the canister, providing a strong bond between the interlayer and each adjacent material, and providing strong bonds within the interlayer. HIP provides advantages in that it is relatively easier to provide even loads and thermal gradients to the material, allows for very high pressing forces, and allows for curved interlayer surfaces without special preparation.

Further manufacturing techniques which may be used to form the interlayer include:

- Powder based techniques such as:

  ○ HIP pressing, as described above,
  ○ FAST (Field Assisted Sintering Technique) pressing, also known as SPS (Spark Plasma Sintering)
  ○ Sintering of one material, with controlled porosity, and the infiltration of the other material into the sintered structure
  ○ Powder spray coating with simultaneous deposition of each material at the desired volume fraction for the given depth into the interlayer, followed by HIP or other pressing techniques
  ○ Resistive ultrahigh pressure sintering, i.e. sintering at GPa pressures with resistive heating
  ○ Laser deposition

- Laminate bonding techniques, such as:

  ○ Explosive welding
  ○ Brazing
  ○ FAST sintering, where laminate foils are bonded by sintering in a stack using interfacial joule heating

- Physical vapour deposition, with controlled volume fraction of each material as the layers of the interlayer are built up.

Particularly where the high thermal expansion material is copper and the low thermal expansion material is tungsten, and the interlayer is also formed from these materials, it may be beneficial to provide surface treatments to the low thermal expansion material layer prior to forming the interlayer, or to low thermal expansion material components of the interlayer prior to bonding them to high thermal expansion material components. For example, in the case where the high thermal expansion material is tungsten, it will form an oxide layer which may interfere with bonding if not removed prior to the bonding process. Additionally, when powder processes are used to deposit the interlayer onto a tungsten bulk, bonding between the tungsten and the copper of the interlayer may be improved if an initial layer of copper is provided on the tungsten by some other process (e.g. brazing of a copper foil, or physical vapour deposition of copper).

As noted previously, this interlayer design is of particular use in a fusion reactor, for both the divertor and the first wall, due to the extreme temperature differences that can be experienced by those components.

An exemplary divertor is shown schematically in Figure 9. The divertor comprises a divertor surface 901 formed from a refractory metal, a cooling system 902 comprising a copper heatsink 903, and an interlayer 904 according to the previous description which joins the divertor surface to the copper heatsink. Using this structure, the divertor surface is thermally joined in an effective way to the copper heatsink, allowing the cooling system to cool the divertor effectively, and greatly reducing damage from thermal expansion caused by the extreme heat loads on the divertor.

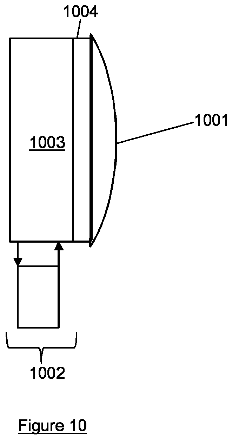

An exemplary first wall tile is shown in Figure 10. The first wall tile comprises a first wall surface 1001 formed from a refractory metal, a cooling system 1002 comprising a copper heatsink 1003, and an interlayer 1004 according to the previous description which joins the divertor surface to the copper heatsink. Using this structure, the first wall surface is thermally joined in an effective way to the copper heatsink, allowing the cooling system to cool the first wall effectively, and greatly reducing damage from thermal expansion caused by the extreme transient heat loads on the first wall. While a tile is illustrated in Figure 10, the same structure may be applied to any construction of the first wall.

As an alternative approach to the use of a refractory metal for the first wall surface, the first wall surface may be formed from a metal with a low atomic number, e.g. beryllium. While such a metal will not have the plasma resistance of a refractory metal, any atoms of the metal which do enter the plasma will have minimal effect due to the low atomic number.

It will be appreciated that where "coefficient of thermal expansion" is used above, this may be the linear, area, or volumetric coefficient of thermal expansion. In the event that the linear or area coefficient of thermal expansion is used and the material under consideration is not isotropic, the relevant linear direction or plane for the area is locally parallel to the join between the interlayer and each material.

Where particular metals are referred to above, alloys primarily composed of those metals may also be used.

While the particular example of a refractory metal joined to copper has been used in several places above, it will be appreciated that the interlayer may be used to join other materials. For example, the materials to be joined may both be metals. The low thermal expansion material may be a ceramic or a composite containing carbon fibre. The high thermal expansion material will generally be a metal, particularly for high heat flux applications where this material is used as a heatsink for a cooler.

Further aspects of the disclosure are set out in the following numbered clauses:

Clause 1. A method of joining first and second materials, wherein the first material is a metal, a ceramic, or a composite material comprising carbon fibre, and the second material is a metal wherein the first material has a coefficient of thermal expansion, CTE, which is higher than a CTE of the second material, the method comprising:

forming an interlayer having a CTE which varies through the interlayer, and having a high thermal expansion surface and a low thermal expansion surface;
bonding the first material to the high thermal expansion surface of the interlayer, and the second material to the low thermal expansion surface of the interlayer;
wherein:

the CTE of the interlayer varies through its depth between the CTE of the first material and the CTE of the second material;
the interlayer has first, second, third, and fourth average coefficients of thermal expansion, aCTE, defined such that each aCTE is the average coefficient of thermal expansion over one quarter of the thickness of the interlayer;

the first aCTE is defined from the high thermal expansion surface and is less than the CTE of the first material;
the second aCTE is defined from the midpoint of the thickness of the interlayer towards the high thermal expansion surface and is less than the first aCTE;
the third aCTE is defined from the midpoint of the interlayer towards the low thermal expansion surface and is less than the second aCTE;
the fourth aCTE is defined from the low thermal expansion surface and is less than the third aCTE and greater than the CTE of the second material;

wherein either:

the difference between the first and second aCTE is greater than the difference between the second and third aCTE, and the difference between the second and third aCTE is greater than the difference between the third and fourth aCTE; or
the difference between the second and third aCTE is greater than both the difference between the first and second aCTE and the difference between the third and fourth aCTE.

Clause 2. A method according to clause 1, wherein the interlayer is formed in-situ during the step of bonding.

Clause 3. A method according to any preceding clause, wherein the interlayer is a composite material comprising a first interlayer material and a second interlayer material, the first interlayer material having a coefficient of thermal expansion at least equal to the coefficient of thermal expansion of the first material, and the second interlayer material having a coefficient of thermal expansion at most equal to the coefficient of thermal expansion of the second material.

Clause 4. A method according to clause 3, wherein the first interlayer material is the first material, and the second interlayer material is the second material.

Clause 5. A method according to clause 3 or 4, wherein forming the interlayer comprises powder sintering powders of the first and second interlayer material, wherein the interlayer coefficient of thermal expansion is dependent on the ratio of the amount of powder of the first interlayer material to the amount of powder of the second interlayer material.

Clause 6. A method according to clause 3 or 4, wherein forming the interlayer comprises:

providing a plurality of laminates of each of the first and second interlayer material;
bonding the laminates so as to form alternating layers of each of the first and second interlayer materials, each layer being parallel to the interlayer, wherein the coefficient of thermal expansion at a given depth into the interlayer is dependent on the thickness of the layers of each interlayer material at that depth.

Clause 7. A method according to clause 3 or 4, wherein:

the interlayer comprises a first element made from the first interlayer material and a second element made from the second interlayer material;

the elements interlock such that the proportion of each interlayer material in a cross section of the interlayer varies with depth through the interlayer;

the coefficient of thermal expansion at a given depth is dependent on the proportion of each interlayer material in a cross section at that depth.

Clause 8. A method according to any preceding clause, wherein bonding the first and second material to the interlayer comprises hot isostatic pressing, diffusion bonding, and/or field assisted sintering.

Clause 9. A method according to any preceding clause, wherein the function is a polynomial function.

Clause 10. An interlayer for joining a first metal and a second metal, the interlayer having a coefficient of thermal expansion, CTE, which varies through the interlayer, and having a high thermal expansion surface and a low thermal expansion surface, wherein:

the interlayer has first, second, third, and fourth average coefficients of thermal expansion, aCTE, defined such that each aCTE is the average coefficient of thermal expansion over one quarter of the thickness of the interlayer;

the first aCTE is defined from the high thermal expansion surface; the second aCTE is defined from the midpoint of the thickness of the interlayer towards the high thermal expansion surface and is less than the first aCTE;

the third aCTE is defined from the midpoint of the interlayer towards the low thermal expansion surface and is less than the second aCTE;

the fourth aCTE is defined from the low thermal expansion surface and is less than the third aCTE;

wherein either:

the difference between the first and second aCTE is greater than the difference between the second and third aCTE, and the difference between the second and third aCTE is greater than the difference between the third and fourth aCTE; or

the difference between the second and third aCTE is greater than both the difference between the first and second aCTE and the difference between the third and fourth aCTE.

Clause 11. An interlayer according to clause 10, wherein the interlayer is a composite material comprising a first interlayer material and a second interlayer material, the first interlayer material having a coefficient of thermal expansion at least equal to the coefficient of thermal expansion of the first metal, and the second interlayer material having a coefficient of thermal expansion at most equal to the coefficient of thermal expansion of the second metal.

Clause 12. An interlayer according to clause 11, wherein forming the interlayer comprises powder sintering powders of the first and second interlayer material, wherein the interlayer coefficient of thermal expansion is dependent on the ratio of the amount of powder of the first interlayer material to the amount of powder of the second interlayer material.

Clause 13. An interlayer according to clause 11, wherein the interlayer comprises alternating layers of each of the first and second interlayer materials, each layer being parallel to the interlayer.

Clause 14. An interlayer according to clause 11, wherein:

the interlayer comprises a first element made from the first interlayer material and a second element made from the second interlayer material;

the elements interlock such that the proportion of each interlayer material in a cross section of the interlayer varies with depth through the interlayer;

the coefficient of thermal expansion at a given depth is dependent on the proportion of each interlayer material in a cross section at that depth.

Clause 15. An interlayer according to any of clauses 10 to 14, wherein the coefficient of thermal expansion varies through the interlayer as a polynomial function of the depth through the interlayer.

Clause 16. An apparatus comprising:

a first component formed from a first metal having a first coefficient of thermal expansion;

a second component formed from a second metal having a second coefficient of thermal expansion which is lower than the first coefficient of thermal expansion; and

an interlayer according to any of clauses 10 to 15, wherein the first metal element is bonded to the high thermal expansion surface of the interlayer, and the second metal element is bonded to the low thermal expansion surface of the interlayer;

wherein the coefficient of thermal expansion of the interlayer has a value between the first and second coefficients of thermal expansion throughout the interlayer.

Clause 17. An apparatus according to clause 16 as dependent directly or indirectly on clause 11, wherein the first interlayer material is the first metal and the second interlayer material is the second metal.

Clause 18. An apparatus according to clause 16 or 17, wherein the apparatus is a divertor or first wall surface for a tokamak plasma chamber, the divertor or first wall surface comprising a plasma facing surface and a cooling arrangement, the cooling arrangement comprising a heatsink, wherein the first component is the plasma facing surface, and the second component is the heatsink.

Clause 19. An apparatus according to clause 18, wherein the first metal is a refractory metal having a melting point of at least 1850°C or an alloy primarily composed of a refractory metal, and the second metal is copper or an alloy primarily composed of copper.

Clause 20. An apparatus according to clause 19 wherein the refractory metal has a melting point of at least 2000°C.

**Claims**

1. A method of manufacturing an interlayer, the method comprising:

> forming a first section from a first interlayer material, the step of forming the first section comprising one or more of:
>
>> laser micromachining;
>> laser surface texturing;
>> electron beam surface texturing;
>> electro-discharge machining; or
>> conventional machining;
>
> forming a second section from a second interlayer material, the step of forming the second section comprising filling the second interlayer material into the first section as a powder or as a molten metal;
> wherein:
>
>> following formation of the second section, the first and second sections interlock; and
>> the first interlayer material and the second interlayer material have different coefficients of thermal expansion, CTE.

2. The method of claim 1, wherein following formation of the second section, the first and second sections interlock such that the proportion of each material in a cross section of the interlayer varies with depth through the interlayer.

3. The method of claim 1 or 2, wherein:

> the coefficient of thermal expansion of the interlayer at a given depth is dependent on the proportion of each interlayer material at that depth;
> the interlayer has a high thermal expansion surface (d=0) and a low thermal expansion surface (d=1),
> the interlayer (301) has first, second, third, and fourth average coefficients of thermal expansion, aCTE, defined such that each aCTE is the average coefficient of thermal expansion over one quarter of the thickness of the interlayer;
> the first aCTE (421) is defined from the high thermal expansion surface;
> the second aCTE (422) is defined from the midpoint of the thickness of the interlayer towards the high thermal expansion surface and is less than the first aCTE;
> the third aCTE (423) is defined from the midpoint of the interlayer towards the low thermal expansion surface and is less than the second aCTE;
> the fourth aCTE (424) is defined from the low thermal expansion surface and is less than the third aCTE;
> the average CTE of a region of the interlayer means the weighted average of the CTE of each of the first and second interlayer materials, weighted by the volume fraction of the respective interlayer material in that region;
> and wherein:
>
>> the difference between the first and second aCTE is greater than the difference between the second and third aCTE, and the difference between the second and third aCTE is greater than the difference between the third and fourth aCTE; or
>> the difference between the second and third aCTE is greater than both the difference between the first and second aCTE and the difference between the third and fourth aCTE.

4. The method of any preceding claim, and comprising, between forming the first section and forming the second section, applying a layer of the second interlayer material to the first section by one of:

applying a foil of the second interlayer material to the first section;
chemical vapour deposition; or
physical vapour deposition.

5. The method of any preceding claim, wherein forming the second section from the second material comprises:

filling the second interlayer material into the first section as a powder;
forming the powder into a bulk by one of:

sintering;
hot isostatic pressing, HIP;
field assisted sintering technique, FAST, pressing.

6. A method of joining a higher-CTE material (202) and a lower-CTE (203) material wherein the higher-CTE material has a coefficient of thermal expansion, CTE, which is higher than a CTE of the lower-CTE material, the method comprising:

forming an interlayer (301) by a method according to any preceding claim;
bonding the higher-CTE material (202) to a high thermal expansion surface of the interlayer, and the lower-CTE material (203) to a low thermal expansion surface of the interlayer;
wherein the CTE of the first interlayer material and the CTE of the second interlayer material are each less than or equal to the CTE of the higher-CTE material and greater than or equal to the CTE of the lower-CTE material.

7. The method of claim 6, wherein:

the higher-CTE material is the same as the first interlayer material and the lower-CTE material is the same as the second interlayer material; or
the higher-CTE material is the same as the second interlayer material and the lower-CTE material is the same as the first interlayer material.

8. The method of claim 6 or 7, wherein the higher-CTE material is a metal, and the lower-CTE material is a metal, a ceramic, or a composite material comprising carbon fibre.

9. A method according to any one of claims 6 to 8, wherein the step of bonding comprises hot isostatic pressing, diffusion bonding, and/or field assisted sintering.

10. A method of joining a first material and a second material, the first material and the second material having different coefficients of thermal expansion, CTE, the method comprising:

forming an interlayer by a method according to any one of claims 1 to 5, wherein the first section of the interlayer is integral with the first material;
bonding the second section of the interlayer to the second material;
wherein the first material is the first interlayer material, and the second interlayer material has a CTE equal to the CTE of the second material or between the CTE of the first material and the CTE of the second material.

EP 4 530 071 A2

Figure 1

Figure 2

Figure 3

Figure 4

Figure 5

Figure 6A

Figure 6B

720

702
701b  700
701a

710

Figure 7A

Figure 7B

Figure 7C

- 820

810

801

CuCrZr – 15 mm

803

W – 4 mm

316L – 8+ mm

702

Figure 8

901

904

903

902

Figure 9

Figure 10